# DEMANDE DE BREVET EUROPEEN

(11) **EP 2 923 745 A1**
(43) Date de publication de la demande: **30.09.2015**
(21) Numéro de dépôt: 15158543.7
(22) Date de dépôt: 11.03.2015
(51) Int. Cl.: A63F 13/98, A63F 13/92, A63F 13/24, G06F 1/16, H04B 1/38, H04M 1/725

(54) **Manette adaptable pour tablette tactile**

(30) Priorité: 27.03.2014 FR 1452675
(71) Demandeur: Bigben Interactive SA, 59814 Lesquin Cedex (FR)
(72) Inventeur: Falc, Alain, 8500 Kortrijk (BE); Allaert, Yannick, 62410 Meurchin (FR); Moreau, Sébastien, 59000 Lille (FR)
(74) Mandataire: Vigand, Philippe

(57) **Abrégé**

Manette adaptable agencée pour recevoir une tablette tactile et comprenant :
- deux parties latérales,
- des moyens de mise en largeur agencés pour régler une largeur entre les deux parties latérales de maintien et pour permettre de recevoir l'une parmi au moins deux tablettes tactiles de tailles différentes, caractérisée en ce que les moyens de mise en largeur comprennent :
- des premiers moyens de réglage agencés pour permettre une première mise en largeur des deux parties latérales par paliers incrémentaux successifs de largeur,
- des deuxièmes moyens de réglage agencés entre les deux parties latérales et en série avec les premiers moyens de réglage, pour permettre une deuxième mise en largeur supplémentaire des deux parties latérales dans une plage de valeurs continue, et comprenant des moyens de rappel élastique.

## Description

La présente invention concerne de manière générale une manette adaptable agencée pour recevoir une tablette tactile, et offrir à l'utilisateur une interface homme machine adaptée par exemple à la pratique des jeux vidéo.

Il est connu dans l'art antérieur des manettes de jeux agencées pour recevoir des tablettes tactiles. En raison de la diversité des tablettes tactiles, avec une multitude de tailles ou formats différents, il est intéressant de proposer une manette qui peut s'adapter aux différentes tailles de tablettes tactiles. Cependant, les moyens de réglage en largeur sont généralement limités et les manettes connues sont souvent dédiées à une gamme de tablettes restreinte. De plus, le réglage en largeur peut être fastidieux avec des verrouillages entre les parties latérales de la manette, sans pour autant limiter le risque de détachement entre la manette et la tablette tactile, entraînant une chute de la tablette tactile.

Le document CN201283220Y divulgue une manette expansible pour un appareil électronique portable.

Un but de la présente invention est de répondre aux inconvénients des documents de l'art antérieur mentionnés ci-dessus et en particulier, tout d'abord, de proposer une manette adaptable pour recevoir une tablette tactile parmi au moins deux tablettes tactiles de tailles différentes, avec une mise en largeur simple et sécurisée.

Pour cela un premier aspect de l'invention concerne une manette adaptable agencée pour recevoir une tablette tactile et comprenant :
- deux parties latérales de maintien de la tablette tactile,
- des moyens de mise en largeur agencés entre les deux parties latérales de maintien pour régler une largeur entre les deux parties latérales de maintien et pour permettre de recevoir l'une parmi au moins deux tablettes tactiles de tailles différentes, caractérisée en ce que les moyens de mise en largeur comprennent :

- des premiers moyens de réglage agencés entre les deux parties latérales pour permettre une première mise en largeur des deux parties latérales par paliers incrémentaux successifs de largeur, et comprenant des premiers moyens de blocage agencés pour bloquer les premiers moyens de réglage dans une position de mise en largeur incrémentale,
- des deuxièmes moyens de réglage agencés entre les deux parties latérales pour permettre une deuxième mise en largeur supplémentaire des deux parties latérales dans une plage de valeurs continue, et comprenant des moyens de rappel élastique agencés pour exercer un effort de rappel vers la première mise en largeur.

La manette adaptable selon la présente mise en oeuvre offre deux moyens de réglage distincts. Les premiers moyens de réglage offrent une première mise en largeur rapide par paliers incrémentaux pour effectuer un réglage approché de la largeur, et un blocage dans cette position. Ensuite, les deuxièmes moyens de réglage permettent d'effectuer la mise en largeur définitive et exacte (dans une plage de valeurs continue) pour s'adapter parfaitement à la taille de la tablette tactile à recevoir. Les moyens de rappel élastique vers la première mise en largeur permettent enfin de pincer ou enserrer efficacement la tablette tactile une fois cette dernière installée dans la manette adaptable, ce qui limite les risques de détachement. En résumé, l'utilisateur a simplement à effectuer une première mise en largeur rapide, bloquer les premiers moyens de réglage et ensuite installer la tablette tactile en commandant les deuxièmes moyens de mise en largeur, et les moyens de rappel élastique se chargent de rapprocher automatiquement les deux parties latérales pour pincer ou enserrer la tablette tactile.

Il est à noter que la mention "tablette tactile" n'est pas limitative de l'emploi de la manette selon la présente invention, qui peut aussi bien servir à recevoir un téléphone portable à écran tactile, autrement appelé smartphone. Il est par ailleurs difficile de faire une distinction entre une tablette tactile et un téléphone portable, en particulier dans le cas d'un appareil électronique portable (même s'il est appelé tablette), muni d'un écran tactile et d'un module de communication sans fil 3G par exemple, si bien que la manette est utilisable avec tout appareil électronique portable muni d'un écran tactile.

Avantageusement, les deuxièmes moyens de réglage sont agencés en série avec les premiers moyens de réglage.

Avantageusement, la manette adaptable comprend une interface de contact agencée pour être en contact avec la tablette tactile reçue par la manette, et l'interface de contact comprend un matériau antidérapant. Le matériau antidérapant permet de limiter les mouvements relatifs entre la manette adaptable et la tablette tactile en synergie avec les moyens de rappel élastique, car ces derniers augmentent la force de frottement en créant un effort de contact entre la tablette tactile et le matériau antidérapant.

Avantageusement, le matériau antidérapant est un élastomère. On peut envisager de l'EPDM (éthylène-propylène-diène monomère) ou du caoutchouc par exemple.

Avantageusement, les deuxièmes moyens de réglage sont agencés pour permettre la deuxième mise en largeur dans un intervalle de largeur inférieur à quatre paliers de largeur incrémentaux successifs. La plage de réglage en largeur avec les deuxième moyens de mise en largeur est avantageusement limitée pour ne pas impacter l'encombrement, mais permet, par le recouvrement de plusieurs paliers de réglage incrémentaux de s'adapter à toutes les tablettes tactiles.

Avantageusement, les deuxièmes moyens de réglage comprennent des deuxièmes moyens de blocage agencés pour bloquer les deuxièmes moyens de réglage dans une position de mise en largeur adaptée à la tablette tactile reçue par la manette.

Avantageusement, les premiers moyens de réglage sont une glissière à crémaillère.

Avantageusement, les deuxièmes moyens de réglage sont une glissière, et les moyens de rappel élastique sont un ressort.

Avantageusement, la manette adaptable comprend :
- des moyens de communication avec la tablette tactile agencés pour envoyer et/ou recevoir des signaux à la tablette tactile,
- des moyens de commande reliés aux moyens de communication et agencés pour générer des signaux de commande pour la tablette tactile. La manette selon cette mise en oeuvre est de plus capable de générer et envoyer des signaux électriques de commande à la tablette tactile.

Avantageusement, les moyens de commande comprennent au moins une interface homme machine avec des boutons de commande.

Avantageusement, la manette adaptable comprend des moyens d'information tactile reliés aux moyens de communication et agencés pour recevoir une commande de signal tactile envoyé par la tablette tactile. Comme leur nom l'indique, les moyens d'information tactile sont agencés pour solliciter le sens du toucher de l'utilisateur, c'est-à-dire que l'on peut faire varier la forme de la manette (une partie de la manette est déformable), la température de la manette (une partie de la manette peut générer du froid ou du chaud), ou encore générer des vibrations par exemple.

Avantageusement, les moyens d'information tactile comprennent au moins un vibrateur agencé pour faire vibrer au moins une partie de la manette adaptable.

Avantageusement, la manette adaptable comprend des moyens de maintien agencés pour maintenir en place la tablette tactile lorsqu'elle est reçue par la manette adaptable. On peut envisager un verrou qui s'adapte à une interface de fixation de la tablette tactile, ou une patte escamotable entre une position escamotée dans laquelle la tablette tactile peut être insérée ou retirée de la manette adaptable, et une position de verrouillage, dans laquelle tout mouvement de retrait de tablette tactile est impossible.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue avant isométrique d'une manette adaptable selon la présente invention ;
- la figure 2 représente une vue arrière de la manette adaptable de la figure 1 ;
- la figure 3 représente une vue de la manette adaptable de la figure 1 en cours d'engagement avec une tablette tactile ;
- la figure 4 représente la manette adaptable de la figure 1 avec une tablette tactile.

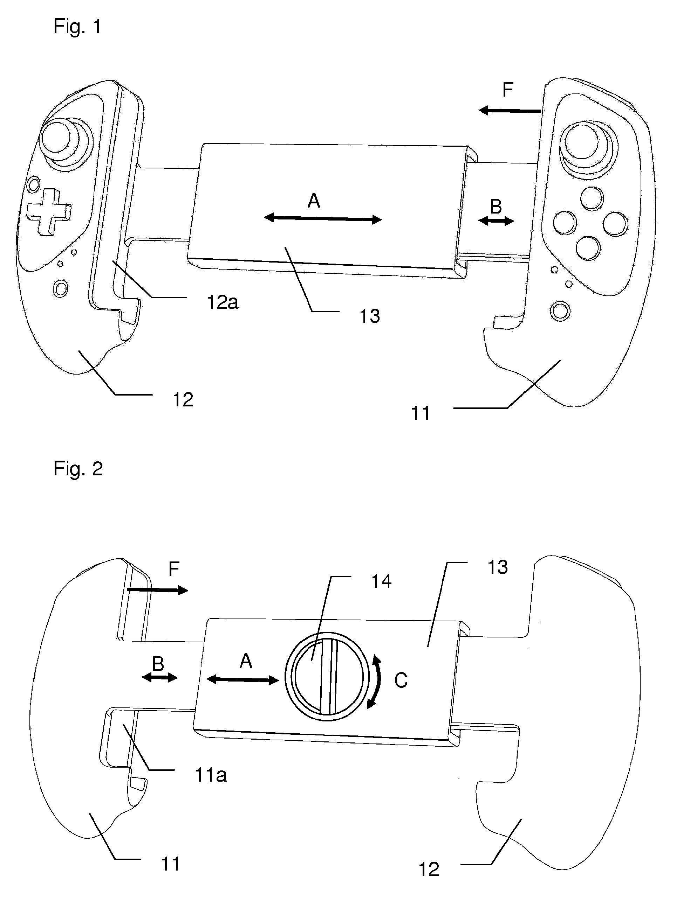

La figure 1 représente une vue isométrique d'une manette adaptable selon la présente invention qui comprend deux parties latérales 11 et 12 reliées ensembles par un bras comprenant un coulisseau 13.

La manette adaptable de la figure 1 peut recevoir une tablette tactile 20 et les parties latérales 11 et 12 comprennent des boutons de commande pour former des interfaces homme machine afin de jouer aisément à un jeu avec la tablette tactile 20 lorsqu'elle est reçue et/ou engagée avec la manette adaptable.

La connexion entre la manette adaptable et la tablette tactile 20 peut être réalisée de différentes manières, et on peut citer une connexion filaire via une prise de type USB ou micro USB de la tablette tactile 20 par exemple, ou encore des connexions sans fil selon différents protocoles tels que Wifi ou Bluetooth par exemple.

Afin de correctement s'engager avec la tablette tactile 20, chaque partie latérale 11 et 12 comprend une rainure, seule la rainure 12a de la partie latérale 12 est visible sur cette figure. La rainure 11 a de la partie latérale 11 est visible sur la figure 2.

De plus, afin de pouvoir proposer une manette adaptable aux différentes tablettes tactiles sur le marché, la manette adaptable selon la présente invention peut s'adapter à au moins deux tablettes tactiles de tailles différentes. A cet effet, la manette adaptable comprend des premiers moyens de mise en largeur qui permettent au coulisseau 13 et à la partie latérale 111 de se mettre en mouvement par rapport à la partie latérale 12 selon le mouvement A.

La manette adaptable comprend également des deuxièmes moyens de mise en largeur qui permettent à la partie latérale 11 de se mettre en mouvement par rapport au coulisseau 13 selon le mouvement B. le mouvement A et le mouvement B sont des mouvements de coulissement.

Le mouvement A permet donc une première mise en largeur rapide selon des incréments de longueur prédéterminés, comme le permet un engagement dans des créneaux par exemple. Une fois cette première mise en largeur effectuée, un blocage du coulisseau 13 par rapport à la partie latérale 12 est effectué. Ensuite, le mouvement B permet une mise en largeur supplémentaire, mais dans une plage de valeur continue, pour offrir une adaptation parfaite à la largeur de la tablette tactile 20 en cause.

Afin de sécuriser le maintien en place de la tablette tactile 20, un effort élastique F est exercé continuellement sur la partie latérale 11 pour la rapprocher de l'autre partie latérale 12. Ainsi, la tablette tactile 20 sera prise en sandwich entre les deux parties latérales 11 et 12. On peut envisager notamment de relier la partie latérale 11 au coulisseau 13 par un ressort de traction par exemple.

On peut envisager d'implanter par exemple en fond de rainure 12a et/ou 11a un matériau antidérapant tel qu'un élastomère, un caoutchouc ou autre matière, qui empêchera tout glissement de la tablette tactile 20 par rapport à la manette adaptable.

La figure 2 représente une vue arrière de la manette adaptable de la figure 1, où on voit des moyens de blocage du mouvement A qui consistent en une molette 14 qui peut pivoter selon un mouvement C pour bloquer ou débloquer le mouvement A du coulisseau 13 par rapport à la partie latérale 12. Il est à noter que le mouvement B de la partie latérale 11 par rapport au coulisseau 13 est toujours possible.

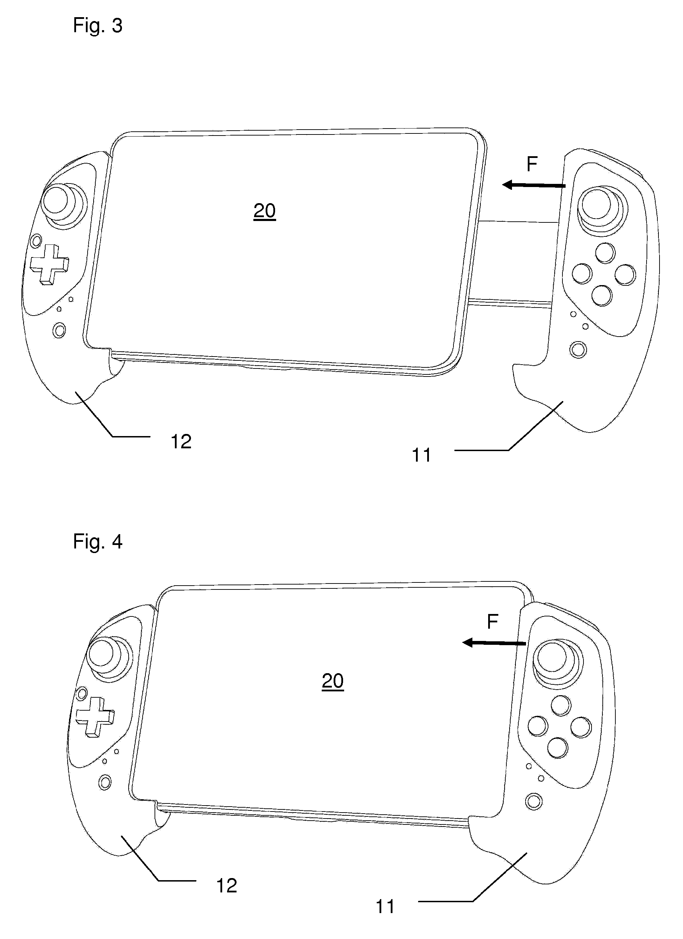

La figure 3 représente l'engagement d'une tablette tactile 20 avec la manette adaptable. Le premier réglage selon le mouvement A a permis d'amener la partie latérale 11 un peu en retrait par rapport à la largeur de la tablette tactile 20 représentée et l'utilisateur doit bloquer en position le coulisseau 13 (non visible ici car caché par la tablette tactile 20), et ensuite tirer sur la partie latérale 11 pour l'écarter encore, malgré la force de rappel F représentée.

La figure 4 représente la tablette tactile 20 engagée sur la manette adaptable, avec la partie latérale 11 en contact avec la tablette tactile 20, et qui exerce un effort F, ce qui assure un bon maintien en place.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

En particulier, aucune limitation de taille n'est retenue dans les revendications, et la destination d'utilisation pour accueillir une tablette tactile mentionnée ne peut être interprétée comme une limitation de la taille de la manette. En particulier, des tablettes tactiles de petite taille peuvent être plus petites que des téléphones portables de grande taille.

## Revendications

1. Manette adaptable agencée pour recevoir un appareil électronique portable équipé d'un écran tactile, et comprenant :
- deux parties latérales (11, 12) de maintien de l'appareil électronique portable,
- des moyens de mise en largeur agencés entre les deux parties latérales (11, 12) de maintien pour régler une largeur entre les deux parties latérales (11, 12) de maintien et pour permettre de recevoir l'un parmi au moins deux appareils électronique portables de tailles différentes, **caractérisée en ce que** les moyens de mise en largeur comprennent :
- des premiers moyens de réglage agencés entre les deux parties latérales (11, 12) pour permettre une première mise en largeur des deux parties latérales (11, 12) par paliers incrémentaux successifs de largeur, et comprenant des premiers moyens de blocage agencés pour bloquer les premiers moyens de réglage dans une position de mise en largeur incrémentale,
- des deuxièmes moyens de réglage agencés entre les deux parties latérales (11, 12) pour permettre une deuxième mise en largeur supplémentaire des deux parties latérales (11, 12) dans une plage de valeurs continue, et comprenant des moyens de rappel élastique agencés pour exercer un effort de rappel vers la première mise en largeur.

2. Manette adaptable selon la revendication précédente, dans lequel l'appareil électronique portable est une tablette tactile (20).

3. Manette adaptable selon l'une des revendications précédentes, comprenant une interface de contact agencée pour être en contact avec la tablette tactile (20) reçue par la manette, et dans laquelle l'interface de contact comprend un matériau antidérapant.

4. Manette adaptable selon la revendication précédente, dans laquelle le matériau antidérapant est un élastomère.

5. Manette adaptable selon l'une des revendications précédentes, dans laquelle les deuxièmes moyens de réglage sont agencés pour permettre la deuxième mise en largeur dans un intervalle de largeur inférieur à quatre paliers de largeur incrémentaux successifs.

6. Manette adaptable selon l'une des revendications précédentes, dans laquelle les deuxièmes moyens de réglage comprennent des deuxièmes moyens de blocage agencés pour bloquer les deuxièmes moyens de réglage dans une position de mise en largeur adaptée à la tablette tactile (20) reçue par la manette.

7. Manette adaptable selon l'une des revendications précédentes, dans laquelle les premiers moyens de réglage sont une glissière à crémaillère.

8. Manette adaptable selon l'une des revendications précédentes, dans laquelle les deuxièmes moyens de réglage sont une glissière, et dans laquelle les moyens de rappel élastique sont un ressort.

9. Manette adaptable selon l'une des revendications précédentes, comprenant :
- des moyens de communication avec la tablette tactile (20) agencés pour envoyer et/ou recevoir des signaux à la tablette tactile (20),
- des moyens de commande reliés aux moyens de communication et agencés pour générer des signaux de commande pour la tablette tactile (20).

10. Manette adaptable selon la revendication précédente, dans laquelle les moyens de commande comprennent au moins une interface homme machine avec des boutons de commande.

11. Manette adaptable selon l'une des revendications 8 ou 9, comprenant des moyens d'information tactile reliés aux moyens de communication et agencés pour recevoir une commande de signal tactile envoyé par la tablette tactile (20).

12. Manette adaptable selon la revendication précédente, dans laquelle les moyens d'information tactile comprennent au moins un vibrateur agencé pour faire vibrer au moins une partie de la manette adaptable.

13. Manette adaptable selon l'une des revendications précédentes, comprenant des moyens de maintien agencés pour maintenir en place la tablette tactile (20) lorsqu'elle est reçue par la manette adaptable.
